# EUROPÄISCHE PATENTANMELDUNG

(11) **EP 4 527 824 A1**
(43) Veröffentlichungstag der Anmeldung: **26.03.2025**
(21) Anmeldenummer: 23198950.0
(22) Anmeldetag: 21.09.2023
(51) Int. Cl.: C05F 17/60, C05F 17/914, C05F 17/964

(54) **BIOREAKTOR**

(71) Anmelder: MARMIX GmbH & Co. KG, 89597 Unterwachingen (DE)
(72) Erfinder: Kaesemann, Thomas, 89597 Unterwachingen (DE); Aßfalg, Daniel, 89143 Sonderbuch (DE)
(74) Vertreter: Kimpfbeck, Thomas

(57) **Zusammenfassung**

Es wird ein Bioreaktor (114; 116; 124;132; 202; 208; 300) zur Verarbeitung von Substrat beschrieben. Der Bioreaktor (114; 116; 124;132; 202; 208; 300) umfasst einen wannenartigen Behälter (100; 118) zur Aufnahme des Substrats, eine Mischvorrichtung (112; 120, 122; 126, 128, 130) zum Mischen des Substrats und eine Zerkleinerungsvorrichtung (112; 120, 122; 126, 128, 130) zum Zerkleinern des Substrats. Der Bioreaktor (114; 116; 124;132; 202; 208; 300) zeichnet sich dadurch aus, dass der wannenartige Behälter (100; 118) einen öffenbaren Deckel (108) umfasst und der wannenartige Behälter (100; 118) thermisch isoliert ist, um eine Hygienisierung des Substrats zu erzielen. Außerdem wird ein Fahrzeug (200; 206) mit dem Bioreaktor (114; 116; 124;132; 202; 208; 300) und ein Verfahren zur Herstellung des Substrats mit dem Bioreaktor (114; 116; 124;132; 202; 208; 300) beschrieben.

## Beschreibung

### TECHNISCHES GEBIET

Die vorliegende Erfindung betrifft einen Bioreaktor zur Verarbeitung von Substrat, ein Fahrzeug mit dem Bioreaktor sowie ein biochemisches Verfahren zur Herstellung von Substrat mit dem Bioreaktor.

### STAND DER TECHNIK

Ein Bioreaktor ist üblicherweise ein Behälter, in dem Mikroorganismen unter bestimmten Bedingungen in einem Nährmedium kultiviert werden, um entweder die Mikroorganismen selbst, Teile von ihnen oder ihr Stoffwechselprodukt zu gewinnen.

Aus der WO 2010/042700 A2 ist ein aerobes Kompostierungssystem mit einem Behälter bekannt. Das System umfasst eine Kompostiervorrichtung und einen programmierbaren Logikcomputer. Die Kompostiervorrichtung umfasst den Behälter, mehrere Schnecken und eine schwimmende Platte. Die Schnecken können sich im Uhrzeigersinn drehen oder gegen den Uhrzeigersinn, um das Kompostmaterial in vertikaler Richtung nach oben oder unten zu bewegen. Die Schnecken sind an einer Halterung im oberen Teil des Behälters befestigt. Die Halterung bewegt sich während des Kompostiervorgangs entlang des Behälters vor und zurück. Die Schnecken sind außerdem drehbar auf der schwimmenden Platte gelagert. Die schwimmende Platte hält die Schnecken in einer betriebsfähigen Position und verhindert, dass sich die Schnecken verbiegen und brechen, ohne die Drehbewegung der Schnecken einzuschränken.

Aus der EP 0 657 405 A1 ist ein Verfahren und eine Vorrichtung bekannt zum Herstellen von festem Dünger aus Flüssigabfällen, insbesondere aus Gülle der Tierhaltung, wobei die Gülle mit Ernterückständen während des Vermahlens der Abfälle vermengt wird.

Aus der EP 0 279 076 A2 ist eine Vorrichtung bekannt zur Zerkleinerung pflanzlicher oder sonstiger der Verrottung unterliegender Abfälle mit zumindest zwei in unterschiedlichen Ebenen gelegene Längsachsen aufweisenden, in aufrechten Gehäusewänden drehbar gelagerten, gegenläufig antreibbaren und/oder gegensinnig ausgerichtete Fördergänge umfassenden Förderschnecken mit einer auf einem Schneckenrohrmantel angeordneten Förderronde. Die in einer unteren Ebene gelegene Förderschnecke ist in einem gehäusewandnahen, rondenfrei ausgebildeten Längsendbereich mit zumindest einem Zerkleinerungswerkzeug versehen. Um die zur Zerkleinerung auch sehr harter Abfälle notwendigen Antriebsleistungen der Förderschnecken ohne Beeinträchtigung der angestrebten Mehrfachumwälzung bzw. Mehrfachzerkleinerung zu verringern, hat das Zerkleinerungswerkzeug eine bogenförmige Schneid- bzw. Reißkante mit einem sich in Förderschneckenumfangsrichtung radial zur Förderschneckenlängsachse erweiternden Bogenverlauf.

Aus der CN 113828616 A ein Tierkörperdesinfektions-Behandlungsfahrzeug bekannt, das einen Lastwagen, einen Generator, eine mobile Schiene und eine kastenförmige Tierkörperdesinfektions-Behandlungsvorrichtung, die auf der mobilen Schiene installiert ist, umfasst. Die kastenförmige Tierkörperdesinfektions-Behandlungsvorrichtung hat einen Kastenkörper, einen intelligenten Steuerschrank und einen pneumatisch gesteuerten Luftkompressor in dem Kastenkörper angeordnet sind. Das Tierkörperdesinfektions-Behandlungsfahrzeug ist ausgestattet mit einem Zerkleinerer zum Schneiden und Zerkleinern der Tierkörper, einem Behälter, einem Förderer, einer Tierkörperverdauungs-Behandlungsmaschine, einer Heizung, einem Verdampfer, einem Abgasreiniger, einem Abgasrohr, einem Flüssigkeitsvorratstank, hydraulischen Stützbeinen zum mechanischen Auf- und Abfahren der kastenförmigen Tierkörperdesinfektionsvorrichtung und einer Hydraulikstation zur Bereitstellung von Hydraulikleistung, einem Desinfektionsmitteltank und einem Sprühgerät, sowie Inaktivierungsausmerzvorrichtungen und -werkzeugen für alte und infizierte Tiere, einer Lademaschine zum Laden der Tierkörper und einer Tierkörperumschlagbox. Das Fahrzeug zur Desinfektion von Tierkörpern dient zur Bekämpfung von Krankheiten und der Verhinderung von Epidemien.

Aus der US 2004/0147013 A1 ist eine Vorrichtung und ein Verfahren zum kontinuierlichen Kompostieren bekannt. Die Wände der Vorrichtung sind thermisch isoliert, um das Innere gegen Umwelteinflüsse wie Hitze, Kälte, Feuchtigkeit und Trockenheit abzuschirmen.

Aus der KR 10-2401999 ist ein Fahrzeug mit Kompostierungsvorrichtung für Tierkadaver bekannt.

### AUFGABE

Die Aufgabe der Erfindung besteht darin einen umweltfreundlichen, energieeffizienten Bioreaktor, ein Verfahren und Fahrzeug mit demselben zur Verarbeitung und, insbesondere zur Hygienisierung, von Substrat bereitzustellen.

### ZUSAMMENFASSUNG DER ERFINDUNG

Erfindungsgemäß wird ein Bioreaktor zur Verarbeitung von Substrat gemäß Anspruch 1 und ein biochemisches Verfahren zur Herstellung von Substrat mit dem Bioreaktor gemäß Anspruch 15 zur Verfügung gestellt. Der erfindungsgemäße Bioreaktor umfasst insbesondere einen wannenartigen Behälter zur Aufnahme des Substrats, eine Mischvorrichtung zum Mischen des Substrats und eine Zerkleinerungsvorrichtung zum Zerkleinern des Substrats. Der wannenartige Behälter kann einen öffenbaren Deckel umfassen. Der wannenartige Behälter ist insbesondere thermisch isoliert, um eine Hygienisierung des Substrats zu erzielen.

Der Bioreaktor ist im Wesentlichen definiert als Behälter, in dem Mikroorganismen unter bestimmten Bedingungen in einem Nährmedium bzw. dem Substrat kultiviert werden, um entweder die Mikroorganismen selbst, Teile von ihnen oder ihr Stoffwechselprodukt zu gewinnen.

Der Begriff Substrat ist im Wesentlichen definiert als Material, auf oder in dem ein Organismus leben kann. Das Substrat kann ein heterogenes, festes Ausgangsmaterial, wie z.B. Grünschnitt, Gärreste aus Biogasanlagen, Molkerei- und Schlachtabfall, Reststoffe aus Fischmehl und Eipulverherstellung, kontaminierte Substrate aus oder mit organischen Komponenten, Maden, und/oder Madenfrass bzw. Insektenkot.

Der Begriff Verarbeitung umfasst insbesondere die Bedeutung von Kompostierung, eines biologischen Prozesses, eines chemischen Prozesses, einer mechanischen Verarbeitung oder Kombinationen daraus.

Die Mischvorrichtung dient insbesondere dazu das heterogene Substrat zu homogenisieren, damit Mikroorganismen das Substrat gleichmäßiger und schneller verarbeiten können. Gemäß einer Weiterbildung der Erfindung können die Mischvorrichtung und die Zerkleinerungsvorrichtung baueinheitlich ausgelegt sein. Die Mischvorrichtung umfasst zum Beispiel einen Rührlöffel oder einen Schneckenmischer bzw. eine Schneckenwelle. Die Mischvorrichtung kann eine integrierte Zerkleinerungsvorrichtung umfassen, zum Beispiel eine Schneide und/oder eine Reißkante. Die integrierte Misch- und Zerkleinerungsvorrichtung dient insbesondere zum effizienten Zerkleinern und Homogenisieren des Substrats. Die Mischvorrichtung kann einen Ein- oder Mehrschneckenmischer umfassen. Noch bevorzugter umfasst die Mischvorrichtung n Schneckenwellen, wobei n eine natürliche Zahl von 1 bis 5 oder sogar bis 10 oder mehr sein kann. Ferner kann die Mischvorrichtung vertikal oder horizontal in dem wannenartigen Behälter angeordnet sein, d.h. einen Vertikal- bzw. Horizontalmischer bilden. Anders gesagt der Bioreaktor kann n horizontale Schnecken bzw. Schneckenwellen und/oder n vertikale Schnecken bzw. Schneckenwellen umfassen. Ferner kann die Mischvorrichtung einen Paddelmischer und/oder Freifall-Paddelmischer umfassen.

Der wannenartige Behälter ist insbesondere ein nach oben geöffneter Behälter. Die Öffnung kann zum Beschicken des wannenartigen Behälters mit Substrat dienen. Der Behälter umfasst insbesondere mindestens vier Seitenwände und einen Boden. Das Material des Behälters umfasst im Wesentlichen Metall, insbesondere Stahlblech. Ein oder mehrere der Seitenwände können mit Rippen verstärkt sein. Ein oder mehrere Seitenwände und/oder der Boden können insbesondere doppelwandig und/oder mit Dämmmaterial ausgestattet sein. Am oberen Rand einer der Seitenwände ist insbesondere der öffenbare Deckel mit einem Scharnier angelenkt. Der Deckel kann zum Beschicken des wannenartigen Behälters geöffnet werden. Der Deckel kann einen hydraulischen oder elektrischen Aktor zum Öffnen und Schließen umfassen. Der Deckel kann thermisch isoliert sein.

Das Substrat kann pathogene Erreger, wie Viren, Bakterien und Pilze enthalten. Zur Hygienisierung des Substrats ist im Allgemeinen eine über einen bestimmten Zeitraum konstant gehaltene und hohe Temperatur erforderlich. Beispielsweise kann eine Erhitzung des Substrats auf über 70°C für die Dauer von einer Stunde erfolgen. Eine Temperatur von über 70°C während der Dauer von einer Stunde kann zum Beispiel Madenfrass bzw. Insektenkot hygienisieren.

Der Begriff hygienisieren ist im Allgemeinen definiert als die Behandlung von Bioabfällen mit dem Ziel Mikroorganismen mit pathogener Wirkung auf Kulturpflanzen, Tiere und Menschen so weit abzutöten, dass nur noch ein geringes Risiko einer Übertragung von Krankheiten besteht.

Gemäß einer weiteren Ausgestaltung kann die Mischvorrichtung zwei Schneckenmischer umfassen. Zwei Schneckenmischer können das Homogenisieren des Substrats beschleunigen und/oder eine bessere Durchmischung des Substrats erzielen als ein einzelner Schneckenmischer. Die Schneckenmischer umfassen insbesondere jeweils eine Welle mit einem in radialer Richtung auf der Welle angeordneten Blech, das die Welle spiralförmig umgibt. Die Schneckenmischer sind mit einem Getriebe gekoppelt, über das der Antrieb erfolgt. Der Antrieb des Getriebes kann zum Beispiel mittels einer Zapfwelle, eines Hydraulikmotor oder eines Elektromotor erfolgen. Noch bevorzugter umfasst die Mischvorrichtung mehrere, insbesondere drei, Mischer. Ein Mischer kann als Schneckenmischer, als Rührlöffel oder als Schneckenförderer ausgebildet sein. Drei Mischer können das Homogenisieren des Substrats beschleunigen, eine bessere Durchmischung des Substrats und/oder ein verbessertes Zerkleinern des Substrats erzielen.

In einer weiteren Ausgestaltung umfasst der erfindungsgemäße Bioreaktor eine seitlich angeordnete Substratauswurfvorrichtung. Seitlich meint dabei insbesondere an einer Seitenwand des wannenartigen Behälters angeordnet. Die Substratauswurfvorrichtung umfasst vorzugsweise ein Förderband und eine öffenbare Klappe. Eine im Bioreaktor verarbeitete bzw. kompostierte Substrat-Charge kann mittels der Substratauswurfvorrichtung zu einer Miete aufgeschüttet werden.

Gemäß einer Weiterbildung kann der erfindungsgemäße Bioreaktor wenigstens eines der folgenden Messinstrumente umfassen, nämlich ein Substrat-Temperaturmessinstrument, ein Substrat-Feuchtemessinstrument, ein Substrat-pH-Wertmessinstrument, eine Uhr und eine Wägeeinrichtung. Bevorzugt umfasst der erfindungsgemäße Bioreaktor wenigstens zwei der Messinstrumente. Noch bevorzugter umfasst der erfindungsgemäße Bioreaktor wenigstens drei der Messinstrumente. Alternativ kann der der erfindungsgemäße Bioreaktor das Substrat-Temperaturmessinstrument, das Substrat-Feuchtemessinstrument, das Substrat-pH-Wertmessinstrument, die Uhr und die Wägeeinrichtung umfassen. Gemäß einer weiteren Ausgestaltung kann der erfindungsgemäße Bioreaktor wenigstens eines der folgenden Prozesssteuerungsmittel umfassen, nämlich eine Zeitschaltuhr, eine Belüftungsvorrichtung, eine Befeuchtungsvorrichtung, einen Wärmetauscher und eine Heizung. Ferner kann der Bioreaktor eine Standheizung zum Beheizen des wannenartigen Behälters umfassen. Außerdem kann der Bioreaktor eine Heizmatte umfassen, die an wenigstens einer Wand des wannenartigen Behälters flächig angeordnet ist, um dieselbe zu beheizen. Die Heizmatte ist z.B. als Widerstandsheizung ausgelegt. Ein Beheizen des wannenartigen Behälters kann insbesondere einen Betrieb bei kalter Witterung oder im Winter erleichtern. Bevorzugt umfasst der erfindungsgemäße Bioreaktor wenigstens zwei der Prozesssteuerungsmittel. Noch bevorzugter umfasst erfindungsgemäße Bioreaktor wenigstens drei der Prozesssteuerungsmittel. Alternativ kann der erfindungsgemäße Bioreaktor die Belüftungsvorrichtung, die Befeuchtungsvorrichtung, den Wärmetauscher und die Heizung umfassen. In einer weiteren Ausführungsform kann der erfindungsgemäße Bioreaktor einen Computer umfassen, der ausgelegt ist das Prozesssteuerungsmittel zu steuern und das Messinstrument auszulesen, wobei der Computer ausgelesene Werte des Messinstruments in einer Datenbank speichern kann.

Das Substrat-Temperaturmessinstrument kann die Temperatur des Substrats im Behälter messen. Die Temperatur kann vom Computer gegenüber ein oder mehreren Temperaturschwellwerten ausgewertet werden. Überschreitet die Temperatur einen oberen Schwellwert, so kann der Computer die Belüftungsvorrichtung derart ansteuern, dass das Substrat abgekühlt wird. Die Belüftungsvorrichtung umfasst vorzugsweise einen Gegenstromwärmetauscher. Unterschreitet die Temperatur einen unteren Schwellwert, so kann der Computer die Heizung ansteuern, um das Substrat zu erhitzen.

Der Computer kann mittels des Substrat-Temperaturmessinstruments und der Uhr ein Temperatur-Zeit-Diagramm ermitteln. Der Computer kann mittels des Substrat-pH-Wertmessinstruments den pH-Wert des Substrats ermitteln. Der pH-Wert ist insbesondere fürdas Abtöten von pathogenen Erregern, wie Viren, von Bedeutung. Ermittelte Messwerte, Messreihen und Diagramme speichert der Computer vorzugsweise in der Datenbank ab. Die Datenbank kann in einer Cloud gespeichert sein. Die Datenbank kann eine Blockchain umfassen. Die Datenbank kann als Nachweis für eine erfolgreiche Hygienisierung dienen. Insbesondere kann die Datenbank folgende Informationen umfassen: Herkunft des Substrats, der Mikroorganismen, von Zusätzen, wie Branntkalk; Verwendung eines bestimmten Bioreaktors; Details oder Umstände des biochemischen Verfahrens, wie z.B. Temperatur, Zeitpunkt der Verfahrensdurchführung, Umgebungsbedingungen; Prüfungsergebnisse, wie Zeitpunkt und Ergebnis einer Qualitätsprüfung und/oder Kundeninformationen, z.B. Lieferweg, Lieferart, Übergabezeitpunkt des Substrats. Die Datenbank kann vorteilhaft die Rückverfolgbarkeit (engl. Traceability) des biochemischen Verfahrens verbessern. Die Datenbank ist vorzugsweise ein digitaler Zwilling (engl. Digital Twin) von im Bioreaktor verarbeitetem Substrat bzw. des biochemischen Verfahrens. Die Datenbank kann einen Nachweis für ein fehlerfreies Substrat bilden und dadurch Risiken aus der Produkthaftung vermindern. Ferner kann die Datenbank zur Verfahrensoptimierung und/oder -steuerung, zur Qualitätsverbesserung durch Fehlervermeidung und Prozessabsicherung, zur Kostenreduzierung durch Effizienzverbesserung Beschaffung, Lager, Logistik, Produkt und Vertrieb und/oder zur Lieferserviceverbesserung durch höhere Transparenz, Planungsgenauigkeit und Steuerungsgenauigkeit eingesetzt werden. Informationen in der Datenbank können eine Nutzung in einem kommerziellen Verwertungsmodell erlauben.

Insbesondere umfasst der Bioreaktor ein Kennzeichnungsmittel. Das Kennzeichnungsmittel kann zur Kennzeichnung einer Substrat-Charge eingesetzt werden, um eine Zuordnung bzw. Identifikation der Substrat-Charge zu ermöglichen. Die Kennzeichnung umfasst eine eindeutige Identifikationsinformation für die Substrat-Charge. Das Kennzeichnungsmittel kann ein Drucker, ein RFID-Tag, ein Barcode, ein Datamatrixcode, ein QR-Code und/oder ein Laser sein.

Die Wägeeinrichtung ermöglicht es vorteilhaft, das Gewicht einer Substrat-Charge mit dem Computer zu erfassen und in der Datenbank abzuspeichern.

Gemäß einer Weiterbildung ist der erfindungsgemäße Bioreaktor mobil ausgelegt. Der Bioreaktor umfasst insbesondere eine Kranöse, Rollen und/oder ein Gestell. In einerweiteren Ausgestaltung kann der erfindungsgemäße Bioreaktor ein Anhänger-Fahrgestell umfassen. Alternativ kann der erfindungsgemäße Bioreaktor ein Selbstfahrer-Fahrgestell umfassen. Ein Transportieren von Substrat zu einem stationären Bioreaktor und ein anschließendes Abtransportieren des kompostierten Substrats kann zeitaufwendig sein und viel Kraftstoff für Transportfahrzeuge erfordern. Die mobile Auslegung des erfindungsgemäßen Bioreaktors erlaubt es, denselben zum Substrat zu bringen, vor Ort das Substrat zu kompostieren und zu Mieten aufzuschütten. Dadurch kann der Transport des Substrats vorteilhaft vermieden werden. Alternativ kann der Bioreaktor stationär angeordnet sein und einen stationären Bioreaktor bilden. Der stationäre Bioreaktor kann ein Fundament, Netz- bzw. stromanschluß, Wasseranschluss, Abwasseranschluss, Internetanschluss und/oder Gasanschluss umfassen, wobei die Heizung eine Gasheizung sein kann.

Gemäß einer Weiterbildung kann der Wärmetauscher mit einer Arbeits- oder Antriebsmaschine gekoppelt sein und Abwärme derselben dem Bioreaktor zuführen. Die Ausgestaltung mit dem Anhänger-Fahrgestell erfordert im Allgemeinen ein Zugfahrzeug, das das Anhänger-Fahrgestell zieht. Abwärme einer Antriebsmaschine des Zugfahrzeugs kann über den Wärmetauscher in den wannenartigen Behälter geleitet werden. Eine Arbeitsmaschine des Selbstfahrer-Fahrgestells kann Abwärme über den Wärmetauscher in den wannenartigen Behälter leiten.

Gemäß einer vorteilhaften Weiterbildung umfasst der erfindungsgemäße Bioreaktor eine Substrat-Ladevorrichtung, insbesondere einen Kran, eine Bandförderanlage und/oder eine Substrat-Fräse. Die Substrat-Ladevorrichtung kann vor Ort genutzt werden, um Substrat in den wannenartigen Behälter zu fördern. So ist vorteilhaft kein Radlader oder Ähnliches erforderlich. Ferner kann der Bioreaktor einen Zwischenbehälter umfassen Durch eine Fördereinrichtung kann eine Teilmenge des verarbeiteten/zu verarbeitenden Substrates in den Zwischenbehälter eingefüllt oder wieder in den wannenartigen Behälter zurückgeführt werden. Der Zwischenbehälter insbesondere abgedichtet, um ein Evakuieren und/oder eine Verringerung des Innendrucks im wannenartigen Behälter zu ermöglichen.

Ein erfindungsgemäßes Fahrzeug mit dem Bioreaktor ist in Anspruch 14 angegeben.

Das erfindungsgemäße biochemische Verfahren kann zur Herstellung von Substrat mit dem Bioreaktor dienen, wobei das Substrat insbesondere für eine vorbestimmte Zeit von insbesondere einer Stunde, noch bevorzugter von mindestens einer Stunde, homogen einer Temperatur von wenigstens 70°C ausgesetzt ist, noch bevorzugter von 70° bis 74°C, um das Substrat zu hygienisieren. Ferner kann das Verfahren den Schritt umfassen, das Substrat mit Mikroorganismen zu versetzen. Die Stoffwechselprodukte der Mikroorganismen erzielen im Allgemeinen eine Kompostierung des Substrats. Vorzugsweise ist das erfindungsgemäße biochemische Verfahren ein Chargenbetrieb, d.h. ein diskontinuierliches Kompostierverfahren. Ferner kann das biochemische Verfahren die Zugabe von Kalkhydrat bzw. gelöschtem Kalk oder von Calciumoxid bzw. Branntkalk umfassen. Kalk hat im Wesentlichen eine Hygenisierungsfunktion für das Substrat. Ferner kann das biochemische Verfahren die Zugabe von Wasser, Luft und/oder Sauerstoff umfassen. Das Wasser ermöglicht eine Aktivierung des Branntkalks und/oder erlaubt eine Einstellung eines Feuchtgehaltes für eine Stoffwechselfunktion der Mikroorganismen. Ferner umfasst das biochemische Verfahren eine Zugabe von Hefen.

Vorteilhafte Weiterbildungen der Erfindung sind in den Unteransprüchen angegeben und in der Beschreibung beschrieben.

### KURZE BESCHREIBUNG DER ZEICHNUNGEN

Ausführungsbeispiele der Erfindung werden anhand der Zeichnungen und der nachfolgenden Beschreibung näher erläutert. Es zeigen:
- Figur 1A: ein Ausführungsbeispiel eines Bioreaktor gemäß der Erfindung,
- Figur 1B: ein weiteres Ausführungsbeispiel eines Bioreaktor gemäß der Erfindung,
- Figur 1C: ein weiteres Ausführungsbeispiel eines Bioreaktor gemäß der Erfindung,
- Figur 1D: ein weiteres Ausführungsbeispiel eines Bioreaktor gemäß der Erfindung,
- Figur 2A: ein Ausführungsbeispiel eines Fahrzeugs gemäß der Erfindung,
- Figur 2B: ein weiteres Ausführungsbeispiel eines Fahrzeugs gemäß der Erfindung und
- Figur 3: ein weiteres Ausführungsbeispiel eines Bioreaktors gemäß der Erfindung.

### BESCHREIBUNG VON AUSFÜHRUNGSFORMEN

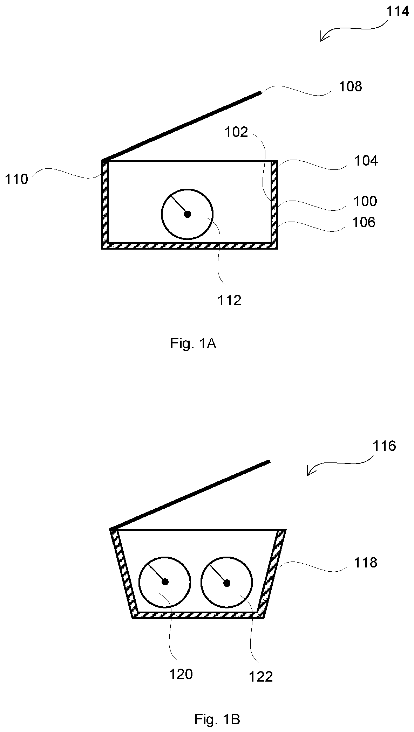

In der Figur 1A ist ein wannenartiger Behälter 100 gezeigt. Der Behälter 100 ist in einem Querschnitt abgebildet. Der Behälter 100 umfasst eine Metallinnenwand 102, eine Metallaußenwand 104 und eine dazwischenliegende Thermoisolationsschicht 106. Der Behälter 100 ist nach oben offen und umfasst einen Deckel 108, der an einer Seitenwand 110 des Behälters angelenkt ist. Ferner umfasst der Behälter 100 einen Schneckenmischer 112. Der Schneckenmischer 112 umfasst eine drehende Welle mit einem schneckenförmigen Blech, das radial entlang der Welle angeordnet ist. Der Schneckenmischer ist vorwärts und rückwärts drehbar. Die Rotationsgeschwindigkeit des Schneckenmischers ist variabel. Die Bestandteile 100 bis 112 bilden einen Bioreaktor 114, der Substrat, wie Grünschnitt, Gärreste aus Biogasanlagen, Molkerei- und Schlachtabfall, Reststoffe aus Fischmehl und Eipulverherstellung, Madenfrass, kompostieren kann. Solche Substrate erfordern präzise Prozessbedingungen. Die Thermoisolationsschicht 106 ermöglicht vorteilhaft Wärmeenergie im Behälter 100 zu halten bzw. die Temperatur des Substrats während der Kompostierung möglichst konstant zu halten.

In der Figur 1B ist ein Bioreaktor 116 mit einem wannenartiger Behälter 118 im Querschnitt gezeigt. Der wannenartige Behälter 118 weist eine umgedrehte Kegelstumpfform auf. Ferner umfasst der Bioreaktor 116 zwei Schneckenmischer 120, 122. Zwei Schneckenmischer verringern die Kompostierungsdauer.

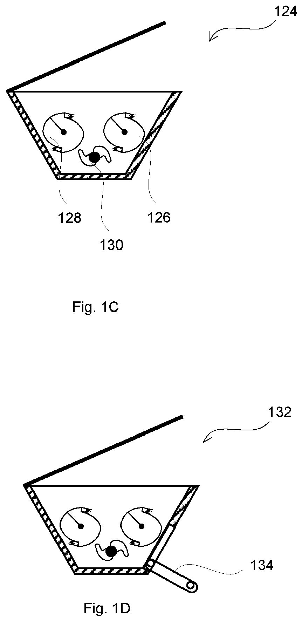

In der Figur 1C ist ein Bioreaktor 124 im Querschnitt gezeigt. Der Bioreaktor 124 umfasst zwei Schneckenmischer 126, 128, die radial mit Reißkanten bzw. Schneidmessern ausgestattet sind. Ferner ist zwischen den Schneckenmischern 126, 128 ein Rührlöffel 130 angeordnet. Der Rührlöffel 130 kann radial Schneidmesser umfassen. Der Bioreaktor 124 hat somit drei Misch- und Zerkleinerungsvorrichtungen 126, 128, 130.

In der Figur 1D ist ein Bioreaktor 132 im Querschnitt gezeigt, der alle Bestandteile der Bioreaktoren 114, 116 und 124 vereint und zusätzlich ein ausklappbares Förderband 134 umfasst, das eine Substratauswurfvorrichtung bildet. Mit dem Förderband 134 kann kompostiertes Substrat aus dem Bioreaktor 132 gefördert und zu einer Miete aufgeschüttet werden.

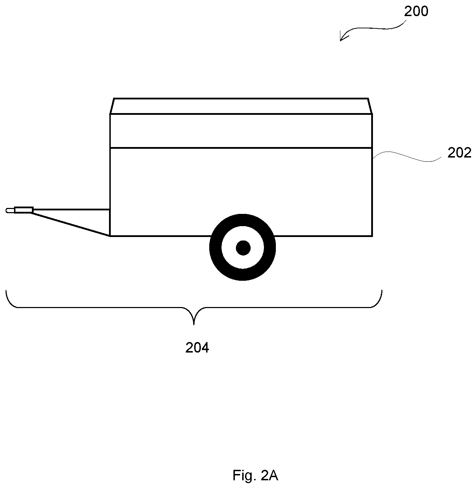

In der Figur 2A ist ein Anhänger 200 gezeigt, der einen Bioreaktor 202 umfasst. Der Bioreaktor 202 kann wie einer der Bioreaktoren 114, 116, 124 oder 132 ausgebildet sein. Der Anhänger 200 umfasst ein Anhänger-Fahrgestell 204. Damit ist der Bioreaktor 202 mobil und kann mittels eines Zugfahrzeugs (nicht gezeigt) zu einer Substrat-Quelle gefahren werden.

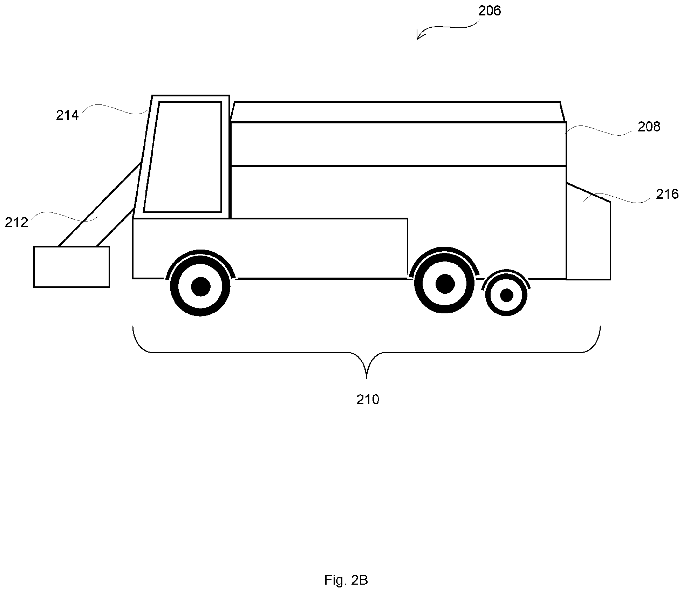

In der Figur 2B ist ein Bioreaktor-Fahrzeug 206 gezeigt. Das Bioreaktor-Fahrzeug umfasst einen Bioreaktor 208, ein Selbstfahrer-Fahrgestell 210, eine Substrat-Fräse 212, ein Führerhaus 214 und eine Antriebsmaschine 216. Damit ist der Bioreaktor 208 mobil und kann zu einer Substrat-Quelle gefahren werden.

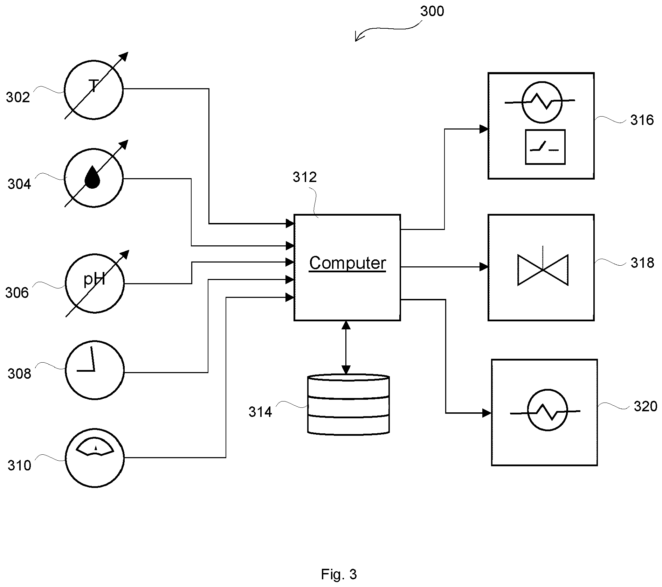

In der Figur 3 ist ein Bioreaktor 300 gezeigt. Der Bioreaktor 300 umfasst Messinstrumente, nämlich ein Thermometer 302, ein Feuchtemessinstrument 304, ein pH-Wertmessinstrument 306, eine Uhr 308 und eine Waage 310. Die Messinstrumente liefern ihre Messwerte an den Computer 312. Der Computer 312 verarbeitet die Messwerte, vergleicht die Messwerte mit Schwellwerten, erstellt Messreihen oder Messprotokolle und speichert diese in der Datenbank 314. Ferner steuert der Computer 312 in Abhängigkeit der Messwerte mehrere Prozessteuerungsmittel, nämlich eine Belüftungsanlage 316 mit Gegenstromwärmetauscher, ein Absperrventil 318, das mit einem Wassertank oder Wasseranschluss verbunden ist, um das Substrat im Bioreaktor zu befeuchten, sowie eine Heizung 320 zum Heizen des Substrats.

### LIST DER BEZUGSZEICHEN

- 100: wannenartiger Behälter
- 102: Metallinnenwand
- 104: Metallaußenwand
- 106: Thermoisolationsschicht
- 108: Deckel
- 110: Seitenwand
- 112: Schneckenmischer
- 114: Bioreaktor
- 116: Bioreaktor
- 118: wannenartiger Behälter
- 120: Schneckenmischer
- 122: Schneckenmischer
- 124: Bioreaktor
- 126: Schneckenmischer
- 128: Schneckenmischer
- 130: Rührlöffel
- 132: Bioreaktor
- 134: Förderband
- 200: Anhänger
- 202: Bioreaktor
- 204: Anhänger-Fahrgestell
- 206: Bioreaktor-Fahrzeug
- 208: Bioreaktor
- 210: Selbstfahrer-Fahrgestell
- 212: Substratfräse
- 214: Führerhaus
- 216: Antriebsmaschine
- 300: Bioreaktor
- 302: Thermometer
- 304: Feuchtemessinstrument
- 306: pH-Wertmessinstrument
- 308: Uhr
- 310: Waage
- 312: Computer
- 314: Datenbank
- 316: Belüftungsanlage
- 318: Absperrventil
- 320: Heizung

## Patentansprüche

1. Bioreaktor (114; 116; 124;132; 202; 208; 300) zur Verarbeitung von Substrat mit
einem wannenartigen Behälter (100; 118) zur Aufnahme des Substrats,
einer Mischvorrichtung (112; 120, 122; 126, 128, 130) zum Mischen des Substrats, einer Zerkleinerungsvorrichtung (112; 120, 122; 126, 128, 130) zum Zerkleinern des Substrats
**dadurch gekennzeichnet,**
**dass** der wannenartige Behälter (100; 118) einen öffenbaren Deckel (108) umfasst und dass der wannenartige Behälter (100; 118) thermisch isoliert ist, um eine Hygienisierung des Substrats zu erzielen.

2. Bioreaktor (114; 116; 124;132; 202; 208; 300) nach Anspruch 1
**dadurch gekennzeichnet,**
**dass** die Mischvorrichtung (112; 120, 122; 126, 128, 130) und die Zerkleinerungsvorrichtung (112; 120, 122; 126, 128, 130) baueinheitlich ausgelegt sind.

3. Bioreaktor (114; 116; 124;132; 202; 208; 300) nach Anspruch 1 oder 2
**dadurch gekennzeichnet, dass**
die Mischvorrichtung (112; 120, 122; 126, 128, 130) zwei Schneckenmischer (112; 120, 122; 126, 128) umfasst.

4. Bioreaktor (114; 116; 124;132; 202; 208; 300) nach einem der vorhergehenden Ansprüche
**dadurch gekennzeichnet, dass**
die Mischvorrichtung mehrere, insbesondere drei, Mischer (112; 120, 122; 126, 128, 130) umfasst.

5. Bioreaktor (114; 116; 124;132; 202; 208; 300) nach einem der vorhergehenden Ansprüche
**dadurch gekennzeichnet, dass**
der Bioreaktor (114; 116; 124;132; 202; 208; 300) eine seitlich angeordnete Substratauswurfvorrichtung (134) umfasst.

6. Bioreaktor (114; 116; 124;132; 202; 208; 300) nach einem der vorhergehenden Ansprüche
**dadurch gekennzeichnet, dass**
der Bioreaktor (114; 116; 124;132; 202; 208; 300) wenigstens eines der folgenden Messinstrumente umfasst, nämlich ein Substrat-Temperaturmessinstrument (302), ein Substrat-Feuchtemessinstrument (304), ein Substrat-pH-Wertmessinstrument (306), eine Uhr (308) und eine Wägeeinrichtung (310).

7. Bioreaktor (114; 116; 124;132; 202; 208; 300) nach einem der vorhergehenden Ansprüche
**dadurch gekennzeichnet, dass**
der Bioreaktor (114; 116; 124;132; 202; 208; 300) wenigstens eines der folgenden Prozesssteuerungsmittel umfasst, nämlich eine Belüftungsvorrichtung (316), eine Befeuchtungsvorrichtung (318), einen Wärmetauscher und eine Heizung (320).

8. Bioreaktor (114; 116; 124;132; 202; 208; 300) nach Anspruch 7
**dadurch gekennzeichnet, dass**
der Bioreaktor (114; 116; 124;132; 202; 208; 300) einen Computer (312) umfasst, der ausgelegt ist das Prozesssteuerungsmittel zu steuern und das Messinstrument auszulesen, wobei der Computer (312) ausgelesene Werte des Messinstruments in einer Datenbank (314) speichert.

9. Bioreaktor (114; 116; 124;132; 202; 208; 300) nach einem der vorhergehenden Ansprüche
**dadurch gekennzeichnet, dass**
der Bioreaktor (114; 116; 124;132; 202; 208; 300) mobil ausgelegt ist, wobei der Biorektor insbesondere eine Kranöse, Rollen und/oder ein Gestell umfasst.

10. Bioreaktor (114; 116; 124;132; 202; 208; 300) nach einem der vorhergehenden Ansprüche
**dadurch gekennzeichnet, dass**
der Bioreaktor (114; 116; 124;132; 202; 208; 300) ein Anhänger-Fahrgestellt (204) umfasst.

11. Bioreaktor (114; 116; 124;132; 202; 208; 300) nach einem der Ansprüche 1 bis 9
**dadurch gekennzeichnet, dass**
der Bioreaktor (114; 116; 124;132; 202; 208; 300) ein Selbstfahrer-Fahrgestell (210) umfasst.

12. Bioreaktor (114; 116; 124;132; 202; 208; 300) nach einem der vorhergehenden Ansprüche
**dadurch gekennzeichnet, dass**
der Wärmetauscher mit einer Arbeits- oder Antriebsmaschine (216) gekoppelt ist und Abwärme derselben dem Bioreaktor (114; 116; 124;132; 202; 208; 300) zuführt.

13. Bioreaktor (114; 116; 124;132; 202; 208; 300) nach einem der vorhergehenden Ansprüche
**dadurch gekennzeichnet, dass**
der Bioreaktor (114; 116; 124;132; 202; 208; 300) eine Substrat-Ladevorrichtung (212) umfasst, insbesondere einen Kran, eine Bandförderanlage und/oder eine Substrat-Fräse (212).

14. Fahrzeug (200; 206) umfassend einen Bioreaktor (114; 116; 124;132; 202; 208; 300) nach einem der vorhergehenden Ansprüche.

15. Biochemisches Verfahren zur Herstellung von Substrat mit einem Bioreaktor (114; 116; 124;132; 202; 208; 300) nach einem der vorhergehenden Ansprüche, wobei das Substrat für eine vorbestimmte Zeit homogen einer Temperatur von wenigstens 70°C ausgesetzt ist, insbesondere von 70° bis 74°C, um das Substrat zu hygienisieren.
